# EUROPEAN PATENT SPECIFICATION

(11) **EP 2 544 928 B1**
(45) Date of publication and mention of the grant of the patent: **31.05.2017**
(21) Application number: 10726203.2
(22) Date of filing: 12.03.2010
(51) Int. Cl.: B60R 25/102, B60R 25/33, B60R 25/10, G08G 1/00

(54) **AUTONOMOUS TRACKING DEVICE FOR VEHICLE**
AUTONOME ORTUNGSVORRICHTUNG FÜR FAHRZEUGE
DISPOSITIF DE SUIVI AUTONOME POUR VÉHICULE

(43) Date of publication of application: 16.01.2013
(73) Proprietor: Mobile Devices Ingenierie, 94800 Villejuif (FR); Solomon, Aaron, 94800 Villejuif (FR)
(72) Inventor: SOLOMON, Aaron, F-94800 Villejuif (FR)
(74) Representative: Cabinet Plasseraud
(86) International application number: PCT/IB2010/001117
(87) International publication number: WO 2011/110891

(56) References cited:
- WO-A1-2008/052657
- WO-A2-2004/001549
- GB-A- 2 389 009
- US-A- 5 491 486
- US-A- 6 141 609
- US-A1- 2003 104 821
- US-A1- 2004 230 372
- US-A1- 2007 168 125
- US-B2- 7 164 384

## Description

### FIELD OF THE INVENTION

The present invention relates to tracking devices for vehicles.

### BACKGROUND OF THE INVENTION

More precisely, the present invention concerns a tracking system for a vehicle comprising an autonomous tracking device for a vehicle, comprising:
- a support member having a front face,
- a GPS antenna adapted to receive GPS signals,
- a short range transceiver adapted to wirelessly send data to a remote unit,
- a control unit adapted to compute a vehicle current location according to said GPS antenna signals and adapted to send tracking data comprising at least said current location of the vehicle to said remote unit via said transceiver,
- at least a rechargeable battery,
- at least a solar photocell adapted to supply the rechargeable battery, and sticking means extending on at least a portion of the front face of the support member, whereby said tracking device can be fixed to a surface of a passenger compartment of a vehicle. Such a vehicle tracking device is known from document WO2004/001549 A2. However, there is a need to improve the integration of such a device in a vehicle and to decrease the cost of such a device.

### SUMMARY OF THE INVENTION

To this end, the tracking system according to the present invention is characterized in that it further comprises a remote unit which is connected to and supplied by an on-board diagnosis port of the vehicle, wherein said remote unit is adapted receive said tracking data from said autonomous device through the short range radio transceiver. Thanks to these dispositions, the installation of such a tracking device is simplified, and the integration in the vehicle is improved. Besides, the cost of the device is also decreased, since, as it is installed in the passenger compartment, it does not require protection against exterior environmental conditions.

In various embodiments of the invention, one may possibly have recourse in addition to one and/or other of the following arrangements:
- the solar photocell is placed on said front face and the sticking means are adapted to be fixed to the inner surface of a windshield of the vehicle;
- the sticking means are adapted to be fixed to a portion of the surface of the dashboard of the vehicle, the tracking device has a housing with a back face opposite to the front face and the solar photocell is placed on the back face;
- said sticking means comprises an adherent layer;
- said adherent layer is translucent;
- said sticking means comprises at least a suction cup;
- said transceiver is a cellular wireless transceiver;
- it further comprises an acceleration sensor; which is adapted to sense at least vehicle acceleration and/or braking intensity;
- said acceleration sensor is a three-dimension accelerometer;
- the tracking device has at least a sleep mode and a tracking mode in which the vehicle current location is periodically computed, wherein the acceleration sensor is adapted to detect an acceleration greater than a predetermined threshold, and adapted to wakeup the tracking device, wherein the tracking device changes from said sleep mode to said tracking mode in response to the detection of said acceleration;
- the tracking device has at least a sleep mode, a tracking mode and a alarm mode in which an alarm is transmitted to the remote unit, it further comprises an anti-tampering housing having a sensor adapted to detect an opening of said housing and adapted to wakeup the device in response to the detection of said opening, wherein the tracking device changes from said sleep mode or said tracking mode to said alarm mode in response to the detection of said opening;
- it further comprises a microphone, said tracking device being adapted to transmit signals generated by said microphone to the remote unit;
- it further comprises an auxiliary battery, adapted to be recharged by the solar photocell and adapted to supply the battery;
- said adherent layer has a thermal conductivity coefficient less than 2 W/°K/m.

The invention also concerns a tracking system comprising an autonomous tracking device and further comprising a distant server adapted to collect and to handle the tracking data.

The invention also concerns a vehicle comprising an autonomous tracking device as defined above.

The invention also concerns a method for handling vehicle location tracking information, comprising an autonomous tracking device as defined above, and comprising the steps of:
- performing a GPS vehicle location computation,
- transmitting a tracking data comprising said vehicle location, via the transceiver.

The invention also concerns a method for handling vehicle location tracking information, comprising an autonomous tracking device as defined above, and comprising the steps of :
- periodically performing a GPS location computation at a first frequency,
- generating a collection of vehicle locations as a function of the time to constitute tracking data,
- periodically transmitting said tracking data at a second frequency, the second frequency being slower than the first frequency.

The invention also concerns a method for handling vehicle location tracking information, comprising an autonomous tracking device as defined above, and comprising the steps of :
- monitoring the acceleration sensor,
- comparing the acceleration sensor information with a predetermined threshold,
- powering up the autonomous tracking device if the acceleration sensor information is greater than said predetermined threshold.

### BRIEF DESCRIPTION OF THE DRAWINGS

Other features and advantages of the invention appear from the following detailed description of three of its embodiments, given by way of non-limiting example, and with reference to the accompanying drawings.

In the drawings:
- Figure 1 is a general view of the installation of the autonomous tracking device in a vehicle according to the invention,
- Figure 2 is a side view of the autonomous tracking device stuck to a windshield,
- Figure 3 is a schematic view of a system integrating the autonomous tracking device according to a first embodiment of the invention,
- Figure 4 is a sectional view of the autonomous tracking device,
- Figure 5 is a front view of the autonomous tracking device,
- Figure 6 is a electrical functional diagram of the autonomous tracking device,
- Figure 7 is a timing chart of the operations of the autonomous tracking device,
- Figure 8 is analogous to Figure 3, showing a system integrating the autonomous tracking device according to a second embodiment of the invention,
- Figure 9 is analogous to Figure 2, showing an alternative solution for sticking means, and
- Figure 10 is analogous to Figure 2, showing a tracking device according to a third embodiment of the invention.

### MORE DETAILLED DESCRIPTION OF THE INVENTION

In the figures, the same references denote identical or similar elements.

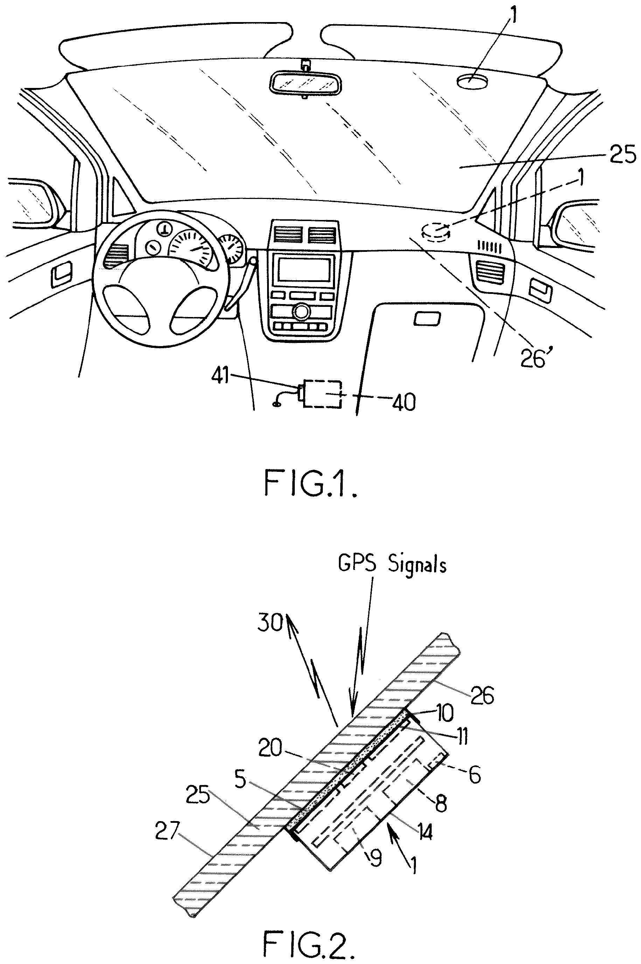

Figure 1 shows a vehicle interior in which an autonomous tracking device 1 is installed on a surface belonging to a passenger compartment of a vehicle, various locations are suitable for such installation according to the invention, provided the tracking device 1 has a certain line-of-sight toward the sky.

According to a first embodiment of the invention, the autonomous tracking device 1 is installed on a portion of the inner surface 26 of a windshield 25. In the example depicted here the tracking device 1 is advantageously installed close to the top section of the windshield, on the side opposite to the driver's side. Another preferred location for the device is the area which is directly behind the rear view mirror. In both cases, from the driver's point of view, the vision of the environment and in particular the road is not hindered by the presence of the tracking device 1. Any other location on the inner side of the windshield 25 can also be considered; in an alternative embodiment, the tracking device 1 may also be installed against the interior side of the rear window. As an alternative to an installation on a window, and according to the third embodiment described later, the tracking device 1 may also be installed on a portion of the dashboard of the vehicle.

As shown in the example of Figure 1, the tracking device 1 has a general shape of a thick disk, with a preferred diameter of about 50 mm and a thickness of about 10 mm.

Furthermore, and optionally as it will be explained later, a control unit 40, also called 'remote unit' or 'dongle' in the following, may be installed as well in the vehicle. This control unit 40 is a small electronic unit which is connected to the on-board diagnosis port 41, also known as 'OBD port' or 'diagnose plug'. The on-board diagnosis port 41 provides the electrical power supply, based on standardized pins, to the control unit 40. The functions of said control unit 40 will be detailed later below.

Figure 2 shows a side view of the autonomous tracking device 1 stuck to a windshield 25. The windshield 25 has a exterior surface 27 and an interior (or 'inner') surface 26 on which is stuck the tracking device 1, thanks to a sticking means 5, which is, in the illustrated example, an adherent layer 5. It should be noted that the invention encompasses other solutions for the sticking means as it will be described later on. As shown in Figure 2, said adherent layer 5 is interposed between the inner surface 26 of the windshield 25 and a support member 10 of the tracking device 1, said support member 10 preferably made of plastic material. More precisely, the support member 10 has a front face 11 delimiting one of its side, said front face 11 having a general form of a flat disk, which cover substantially all the surface of the corresponding side of the tracking device 1.

Advantageously according to the invention, the adherent layer 5 has also the shape of a flat disk, with the same diameter as the front face 11, and a thickness comprised between 0,2 mm and 1,5mm.

As it will be explained below the tracking device 1 comprises components that require to be in direct vision (direct 'line-of-sight') with the sky; advantageously, the adherent layer 5 is translucent to the light and to the electromagnetic signals. More precisely, the adherent layer can be a silicon glue layer, a transparent two-sided adhesive tape.

However, still in the scope of the invention, the sticking means 5 can also be part of a hook-and-loop tape (also known as '®Velcro') or any type of suitable sticking means known in the art.

Further, the sticking means 5 and in particular the adherent layer 5 has a low thermal conductivity coefficient, for example in particular below 2 W/°K/m, which thermally insulates the tracking device 1 from the extreme temperatures undergone by the windshield 25 itself.

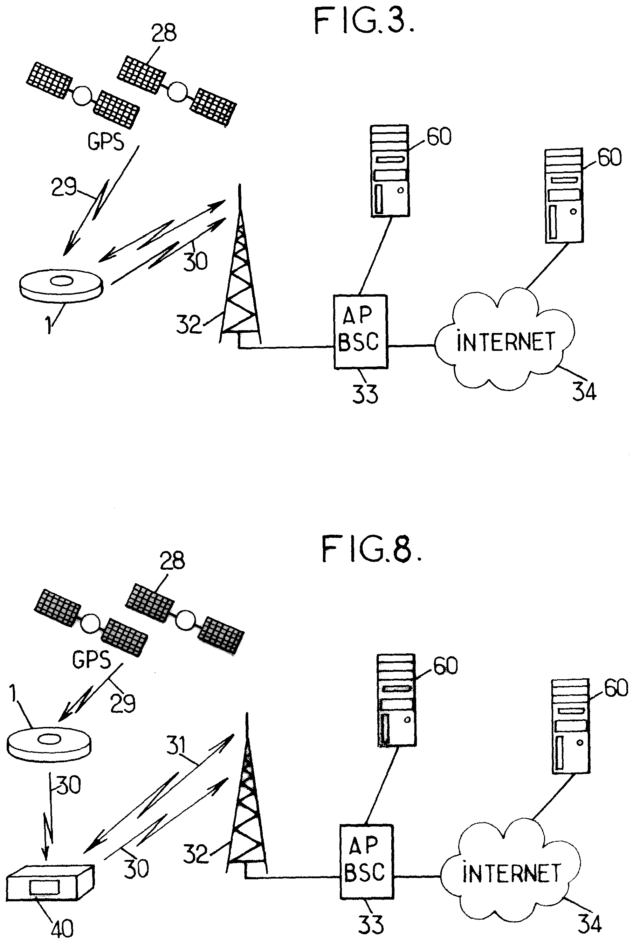

Figure 3 is a schematic view of a system integrating the autonomous tracking device according to a first embodiment of the invention. The tracking device 1 receives GPS signals 29 from GPS satellites 28 as well known in the art; as it will be later described in details, the tracking device 1 computes the current vehicle geographical location from said GPS signals 29. Then the tracking device 1 elaborates a set of data including one vehicle location or a collection of successive time stamped vehicle locations, such set of data is called 'tracking data' 30 in the following.

This tracking data is sent to a distant server 60 via a wireless network 32,33. Said distant server 60 is either connected directly to the wireless management system 33, or connected generally to the Internet 34, in the latter case, the distant server 60 can be located anywhere where Internet is available. It should be noted that, instead of on distant server 60, the system can involve a plurality of distant servers 60.

The wireless network 32,33 can be any wireless network known in the art, like for example GSM, GPRS, CDMA, UMTS, LTE, WIMAX, etc.... Said wireless network is well known in the art and thus only depicted symbolically with at least an antenna 32, Access Point (AP) / Base Station Controller (BSC) 33, and the wired Internet 34.

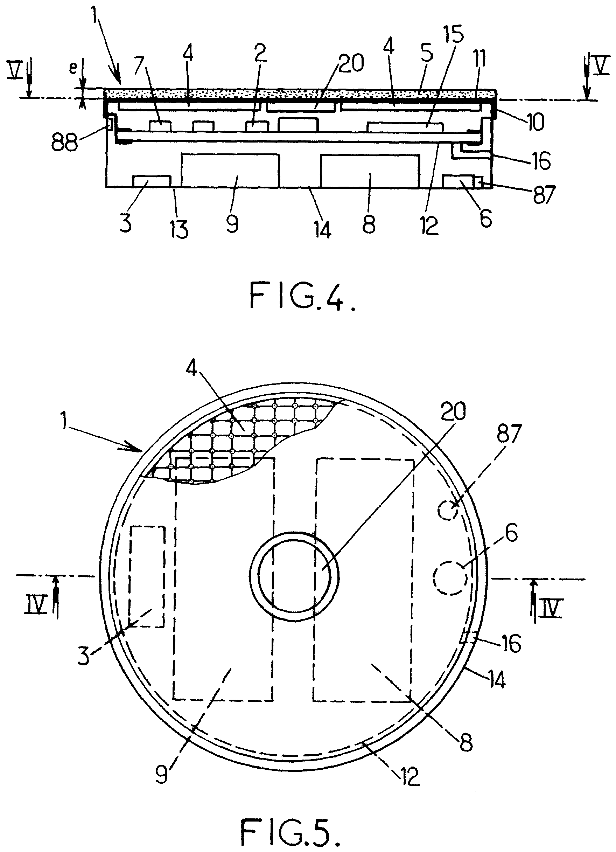

As shown in Figures 2, 4, 5 and 6, the tracking device 1 comprises :
- the support member 10 with its front face 11 as already described,
- a housing 14 adjacent and fixed to the support member 10, said housing 14 having a back face 13, said housing 14 preferably made of plastic material, said housing 14 and said support member 10 forming together a closed enclosure,
- a GPS module 2 linked to a disk-shaped GPS antenna 20 located in the depicted example in the centre of the front face 11, the diameter of said GPS antenna 20 being three to four times smaller than the diameter of the front face 11,
- a solar photocell 4 or a solar photocell array 4, located on the front face 11, such photocell array 4 covers substantially all the surface of the front face 11 except the surface occupied by the GPS antenna, (it should be noted that the GPS antenna could also be located underneath the photocell array 4 which in this case would cover the complete disk),
- a transceiver 3, adapted to send and/or receive electromagnetic signals, which is a cellular wireless transceiver in the case of the first embodiment, such transceiver is adapted to handle communication with the wireless network 32,33 to which the tracking device 1 is linked,
- a control unit 15, for example a microcontroller 15 adapted to compute the vehicle current location according to said GPS signals and adapted to send tracking data 30 comprising at least said current location of the vehicle to said remote unit 60 via said transceiver 3,
- a printed circuit board 12 formed like a thin disk, and bearing the microcontroller 15, the GPS module 2 and other electronic components,
- an acceleration sensor 7 arrangement adapted to sense at least vehicle acceleration, which in the example given comprises a three dimensional accelerometer 71,72,73 able to sense the acceleration in the three space dimensions; It should be noted than such acceleration sensor or accelerometer are also referred to as 'G-force' sensors,
- a rechargeable battery 8 fixed on the back face 13 of the housing, preferably a Lithium-Polymer battery, said rechargeable battery 8 providing the electrical power supply for all the relevant components like the GPS module, the microcontroller 15, the transceiver 3, and various other items, said rechargeable battery 8 being connected directly to the output of the photocell array 4, or via another battery explained just below,
- optionally, an auxiliary battery 9, also fixed on the back face 13 of the housing, said auxiliary battery 9 being electrically interposed between the output of the photocell array 4 and the rechargeable battery 8, the electrical operation of this arrangement will be described later,
- optionally, a microphone 6 adapted to record sounds, voices or the like, said recorded sound being transmitted to the remote unit together or separately with the tracking data 30,
- optionally, a USB port 16, which can be used to recharge the battery 8, or to access the microcontroller 15 for configuration or diagnosis purposes,
- optionally, an 'emergency' button 87, whose purpose will be described later.

It should be noted that according to various possible implementations, the GPS module 2 might be integrated into the control unit 15 in a single unit.

It should also be noted that the GPS antenna 20 and the photocell array 4 are placed on the front face 11 exposed toward the windshield 25. In the preferred embodiment, the support member 10 is designed to have a translucent wall on the side of the front face 11, so the support member 10 does not occult the reception of light or electromagnetic waves crossing the windshield 25 to reach the tracking device 1. The support member 10 may also be designed with wide openings on the side of the front face 11 so the support member 10 does not occult the reception of light or electromagnetic waves crossing the windshield 25 to reach the tracking device 1.

More precisely, as explained earlier, the adherent layer 5 is arranged to be translucent, thus the adherent layer 5 does not occult the reception of light or electromagnetic waves crossing the windshield 25 to reach the tracking device 1. Therefore, since the lights signals and electromagnetic waves can go through the windshield 25 itself, the adherent layer 5 and the support member 10, said lights signals coming from the sun or any artificial light source easily reach the photocell array 4 and said electromagnetic waves, in particular GPS signals 29 coming from GPS satellites 28 easily reach the GPS antenna 20.

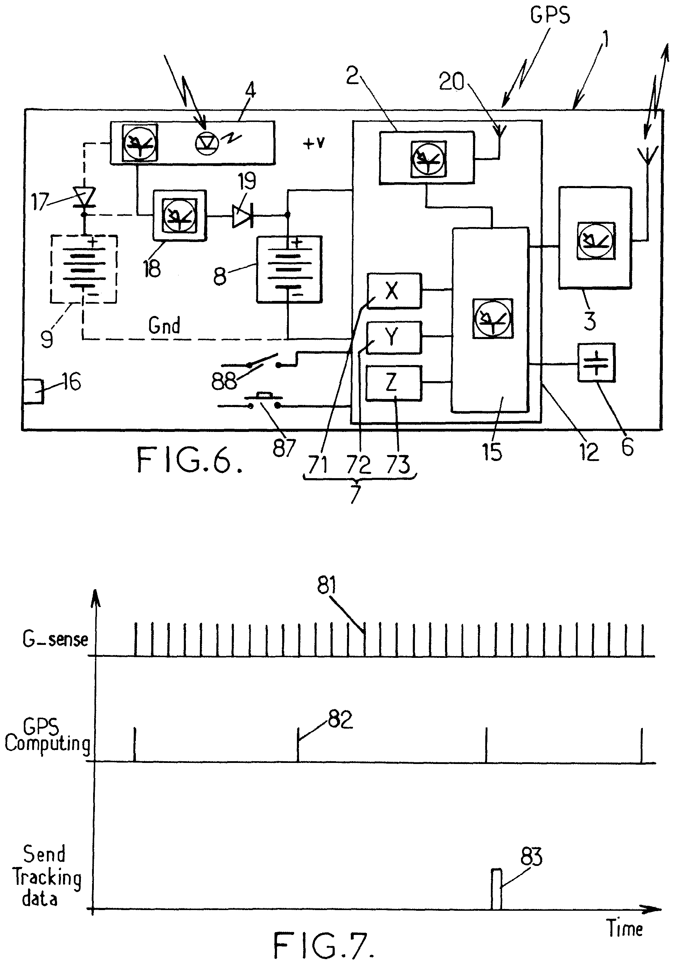

Figure 6 shows the electrical functional diagram of the autonomous tracking device 1, where it can be seen that the printed circuit board 12 bears at least the microcontroller 15, the acceleration sensors 7, the GPS module 2. Besides, the tracking device 1 also includes the communication transceiver 3, the GPS antenna 20, the rechargeable battery 8, the solar photocell array 4, and optionally the auxiliary battery 9, the microphone 6 and the emergency button 87.

If only one battery is used, i.e. the rechargeable battery 8, the output of the photocell array 4 is supplied to the battery 8 through a charge regulation arrangement 18, and one or two diodes 17,19. In a simplified circuit diagram (not shown) the output of the photocell array 4 is supplied to the battery 8 only with a diode 19. In case the voltage supplied by the photocell array 4 is greater than the current voltage of the battery 8, then a recharge current can flow through the diode 19, but as soon as voltage supplied by the photocell array 4 is smaller than the current voltage of the battery 8, no recharge current can flow through the diode 19. Therefore, according to the sun or light environment, the recharge current can therefore be somewhat capricious.

However, the lifetime of a Lithium-Polymer battery like the rechargeable battery 8 is improved if the recharge current is steady and said lifetime can be reduced if the recharge current is variable.

Therefore, advantageously according to the invention, an auxiliary battery 9 can be electrically interposed between the photocell array 4 and the rechargeable battery 8. Such auxiliary battery 9 acts as a buffer battery, this auxiliary battery can be of the Lithium-Ion type or of another type, even a supercapacitor can be used, such type of batteries exhibits a lower power/volume index than a Lithium-Polymer battery but a better acceptance of variable recharges.

Thanks to the presence of this buffering auxiliary battery 9, the photocell array 4 supplies the auxiliary battery 9 via the diode 17, with a steady or most of the time a variable recharge current. The rechargeable battery 8 is no longer supplied by the photocell array 4, but rather the rechargeable battery 8 is supplied by the auxiliary battery via a charge regulation arrangement 18 which produces a steady recharge current from the energy stored in the auxiliary battery 9.

Figure 7 shows a timing chart of the operations of the autonomous tracking device, when it is in tracking mode. Thanks to the GPS signals 29, the GPS antenna 20 and the GPS module 2, the tracking device 1 computes the vehicle location at a certain sampling rate 82 with a first predetermined frequency, for example one location computation per second (1 Hz).

The successive vehicle locations computed are buffered, said several vehicle locations in function of the time are gathered into what is called the 'tracking data' 30 already mentioned.

Said tracking data is then sent periodically at a second frequency 83, the second frequency being slower than the first frequency, for example 1/900 Hz (period of 15 minutes). Thanks to the slower transmission frequency, the electrical consumption of the tracking device 1 is minimized, the transceiver 3 being activated only when the tracking data 30 needs to be sent and powered off the rest of the time.

Furthermore, when acceleration sensors 7 are used, the tracking device 1 acquires the acceleration sensing 81 at a third frequency, for example every 20ms (50 Hz frequency). This acceleration information gives an image of the dynamic behavior of the vehicle, and the user's profile. This acceleration information can be partially or totally reported into the tracking data 30, optionally with a data treatment (averaging, min/max, etc...).

When acceleration sensors 7 are used, a additional power management feature advantageously takes into account the information given by the acceleration sensors 7, as explained just below.

As long as the sensors 7 sense an acceleration smaller than a predetermined threshold for a predetermined time, the tracking device 1 falls or stays in a sleep mode in order to save the energy stored in the battery. In the sleep mode, no GPS position is computed, no tracking data is sent to the remote unit, the electrical consumption doest not exceed 100 microAmperes, which corresponds to the stand-by consumption when the vehicle is parked.

On the other hand, when the acceleration sensor detects an acceleration greater than said predetermined threshold, then the wakeup of the tracking device 1 occurs, the tracking device 1 changes from the sleep mode to the tracking mode. As soon as the tracking mode is activated, the GPS location is periodically computed and the tracking data is periodically sent as explained above.

The acceleration sensors 71,72,73 can also be used to determine a user profile regarding the current driver of the vehicle. In particular, accelerations measured along the longitudinal axis of the vehicle reflect the acceleration intensities and braking intensities undergone during driving. Similarly, accelerations measured along the transversal axis of the vehicle reflect the centrifugal forces. These measurements allow to compute, locally in the tracking device 1 or remotely in the remote unit, how sporty or calm is the user's driving and how fuel efficient is the user's driving, thereby defining a user's profile.

Furthermore, the tracking device 1 comprises an anti-tampering feature. The housing 14 is an anti-tampering housing, equipped with a sensor 88 adapted to detect an opening of the housing 14. If such an event occurs, the tracking device 1 is powered up and sent immediately an alarm message to the remote unit 40;60. More precisely, in response to the detection of the opening from the sensor 88, the tracking device 1 changes from sleep mode or tracking mode according to the prevailing current operational mode to an alarm mode, in which alarm messages are sent to the remote unit 40;60.

Figure 8 shows a second embodiment of the invention, in which the remote unit 40 is a control unit 40 (also known as a 'dongle') installed in the passenger compartment of the vehicle. As already explained above, said control unit 40 is connected to the on-board diagnosis port 41 of the vehicle, said on-board diagnosis port 41 provides the electrical power supply, based on standardized pins, to the control unit 40. Said control unit 40 comprises a short-range radio transceiver cooperating with the short-range radio transceiver 3 of the tracking device 1. In this case, the transceiver 3 of the tracking device 1 is a simple short-range radio transceiver and thus requires less operating power than a cellular wireless transceiver.

Said control unit 40 thus receives the tracking data transmitted by the tracking device 1 over this short-range low-consumption radio link.

It should be noted that any short-range radio standard known in the art can be used like Bluetooth, ZigBee, 802.11x, etc....

Said control unit 40 also comprises a cellular wireless transceiver (not shown in details), adapted to handle communication 31 with distant server(s) 60 over the wireless network 32,33, the description of which will not be repeated here.

Thanks to its cellular wireless transceiver, said control unit 40 can forward he tracking data 30 transmitted by the tracking device 1 toward distant server(s) 60.

Further the control unit 40 may comprise additionally a loudspeaker, adapted to output audio messages coming for example from the distant server 60.

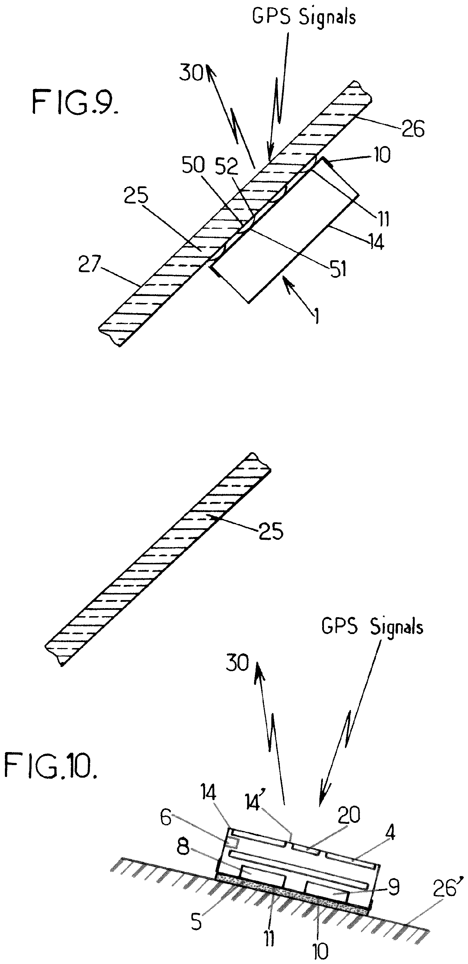

Figure 9 shows an alternative solution for the sticking means adapted to fix the tracking device 1 to the inner surface 26 of the windshield 25. Instead of using an adherent layer as described above, the sticking means 5 comprise at least one suction cup 50 which is interposed between the front face 11 and the inner surface 26 of the windshield 25. Preferably several suction cups are used disposed along a circle centered on the center of the tracking device 1. Each suction cup 50 has a general shape of a dome open toward the windshield 25, with a summit 51 attached to the front face 11 and a circular border 52 hermetically jointed to the inner surface 26 of the windshield 25.

Besides, the emergency button 87 can be used by the driver to ask for help or notify a dangerous situation. After the emergency button 87 has been pressed the tracking device 1 passes in a special emergency mode, in which the microphone signals are picked up continuously and sent immediately to the remote unit, in this case no buffering happens.

Regarding the second embodiment of the present invention, and thanks to the presence of the loudspeaker in the control unit, a bidirectional audio communication can be established between the user and an assistance platform supported by the distant server 60, thereby providing an on-line help for the driver.

Further, the tracking device 1 may be fitted, after manufacturing and prior to installation, with a thin protection film upon the adherent layer 5, such a protection film will guarantee that the adherent layer 5 remains perfectly clean before the thin protection film is removed immediately before installation.

Figure 10 shows an alternative solution, according to the third embodiment of the invention, for the installation location of the tracking device 1, which is installed on a portion of a surface 26' of the dashboard of the vehicle.

In this configuration, the tracking device comprises the same components as in the first and second embodiments, with some difference described below, whereas non-mentioned elements are assumed to be identical to the description given for the first and second embodiments.

The support member 10 and its front face 11 bears on the surface of the dashboard, whereas the housing 14 has a back face 14' exposed to the outside and having a line-of-sight toward the sky through the windshield 25. Advantageously the back face 14' is translucent and the solar photocell 4 or solar photocell array 4 is arranged just behind this translucent back face 14' to receive the light from the sky. The GPS antenna 20 may be located in the depicted example in the centre of the solar photocell array 4 or just beneath as already explained above. The microphone 6 is on the side of the housing 14.

According to the third embodiment of the invention, the sticking means 5 can be of any type already mentioned above, but it should be noted that the sticking means (5;50) needs not be translucent, the invention encompasses any type of sticking means including hook-and-loop tapes (also known as '®Velcro') or any other equivalent means.

## Claims

1. Tracking system for a vehicle, comprising an *autonomous* tracking device (1) and a remote unit (40) which is connected to and supplied by an on-board diagnosis port (41) of the vehicle,
the *autonomous* tracking device (1) comprising:
- a support member (10) having a front face (11),
- a GPS antenna (20) adapted to receive GPS signals,
- a short-range radio transceiver (3) adapted to wirelessly send data to the remote unit (40),
- a control unit (15) adapted to compute a vehicle current location according to said GPS antenna signals and adapted to send tracking data (30) comprising at least said current location of the vehicle to said remote unit (40) via said transceiver (3),
- at least a rechargeable battery (8),
- at least a solar photocell (4) adapted to supply the rechargeable battery (8),
- sticking means (5;50) extending on at least a portion of the front face (11) of the support member, whereby said tracking device (1) can be fixed to a surface (26;26') of a passenger compartment of a vehicle,
wherein said remote unit (40) is adapted to receive said tracking data from said autonomous tracking device (1) through the short-range radio transceiver.

2. Tracking system according to claim 1, wherein the solar photocell (4) is placed on said front face (11) and the sticking means (5;50) are adapted to be fixed to the inner surface (26) of a windshield (25) of the vehicle.

3. Tracking system according to claim 1, wherein the sticking means (5;50) are adapted to be fixed to a portion of the surface (26') of the dashboard of the vehicle, wherein the tracking device (1) has a housing (14) with a back face (14') opposite to the front face (11) and wherein the solar photocell (4) is placed on the back face (14').

4. Tracking system according to any of the claims 1-2, wherein said sticking means (5;50) comprises an adherent layer (5).

5. Tracking system according to claim 4, wherein said adherent layer is translucent.

6. Tracking system according to any of the claims 1-2, wherein said sticking means (5;50) comprises at least a suction cup (50).

7. Tracking system according to any of the preceding claims, wherein the tracking device (1) further comprises an acceleration sensor (7).

8. Tracking system according to claim 7, wherein the tracking device (1) has at least a sleep mode and a tracking mode in which the vehicle current location is periodically computed, wherein the acceleration sensor (7) is adapted to detect an acceleration greater than a predetermined threshold, and adapted to wakeup the tracking device (1), wherein the tracking device (1) changes from said sleep mode to said tracking mode in response to the detection of said acceleration.

9. Tracking system according to claim 1, wherein the tracking device (1) has at least a sleep mode, a tracking mode and a alarm mode in which an alarm is transmitted to the remote unit (40), further comprising an anti-tampering housing (14) having a sensor (88) adapted to detect an opening of said housing and adapted to wakeup the device in response to the detection of said opening, wherein the tracking device (1) changes from said sleep mode or said tracking mode to said alarm mode in response to the detection of said opening.

10. Tracking system according to any of the preceding claims, further comprising a microphone (6), said tracking device (1) being adapted to transmit signals generated by said microphone (6) to the remote unit (40).

11. Tracking system according to any of the preceding claims, wherein the tracking device (1) further comprises an auxiliary battery (9), adapted to be recharged by the solar photocell and adapted to supply the battery (8).

12. Tracking system according to any of the preceding claims, further comprising a distant server (60) adapted to collect and to handle the tracking data (30).

13. **Vehicle** comprising an autonomous tracking system according to any of the preceding claims.

14. **Method** for handling vehicle location tracking information, in a tracking system according to any of the claims 1-13, comprising the steps of :
- performing a GPS vehicle location computation in the tracking device (1),
- transmitting a tracking data comprising said vehicle location, via the transceiver (3) to the remote unit (40).

15. Method for handling vehicle location tracking information, in a tracking system according to any of the claims 1-13, comprising the steps of :
- periodically performing a GPS location computation at a first frequency,
- generating a collection of vehicle locations as a function of the time to constitute tracking data,
- periodically transmitting said tracking data at a second frequency, the second frequency being slower than the first frequency.

16. Method for handling vehicle location tracking information, in a tracking system according to any of the claims 7-8, and comprising the steps of :
- monitoring the acceleration sensor (7),
- comparing the acceleration sensor information with a predetermined threshold,
- powering up the autonomous tracking device (1) if the acceleration sensor information is greater than said predetermined threshold.

## Patentansprüche

1. Ortungssystem für ein Fahrzeug, welches eine autonome Ortungsvorrichtung (1) und eine Ferneinheit (40), die mit einem Borddiagnoseport (41) des Fahrzeugs verbunden ist und von diesem versorgt wird, aufweist,
wobei die autonome Ortungsvorrichtung (1) Folgendes aufweist:
- ein Tragelement (10) mit einer Vorderfläche (11),
- eine GPS-Antenne (20), die dafür eingerichtet ist, GPS-Signale zu empfangen,
- einen kurzreichweitigen Funk-Sendeempfänger (3), der dafür eingerichtet ist, drahtlos Daten zur Ferneinheit (40) zu senden,
- eine Steuereinheit (15), die dafür eingerichtet ist, den aktuellen Aufenthaltsort des Fahrzeugs entsprechend den GPS-Antennensignalen zu berechnen und Aufenthaltsortsdaten (30), welche zumindest den aktuellen Aufenthaltsort des Fahrzeugs aufweisen, über den Sendeempfänger (3) zur Ferneinheit (40) zu senden,
- wenigstens eine wiederaufladbare Batterie (8),
- wenigstens eine Solarphotozelle (4), die dafür eingerichtet ist, die wiederaufladbare Batterie (8) zu versorgen,
- Haftmittel (5; 50), die sich auf zumindest einem Teil der Vorderfläche (11) des Tragelements erstrecken, wodurch die Ortungsvorrichtung (1) an einer Fläche (26; 26') des Fahrgastraums eines Fahrzeugs befestigt werden kann,
wobei die Ferneinheit (40) dafür eingerichtet ist, die Ortungsdaten von der autonomen Ortungsvorrichtung (1) über den kurzreichweitigen Funk-Sendeempfänger zu empfangen.

2. Ortungssystem nach Anspruch 1, wobei die Solarphotozelle (4) auf der Vorderfläche (11) angeordnet ist und die Haftmittel (5; 50) dafür eingerichtet sind, an der Innenfläche (26) der Windschutzscheibe (25) des Fahrzeugs befestigt zu werden.

3. Ortungssystem nach Anspruch 1, wobei die Haftmittel (5; 50) dafür eingerichtet sind, an einem Teil der Fläche (26') des Armaturenbretts des Fahrzeugs befestigt zu werden,
wobei die Ortungsvorrichtung (1) ein Gehäuse (14) mit einer der vorderen Fläche (11) entgegengesetzten rückseitigen Fläche (14') aufweist und wobei die Solarphotozelle (4) auf der rückseitigen Fläche (14') angeordnet ist.

4. Ortungssystem nach einem der Ansprüche 1 bis 2, wobei die Haftmittel (5; 50) eine Haftschicht (5) aufweisen.

5. Ortungssystem nach Anspruch 4, wobei die Haftschicht lichtdurchlässig ist.

6. Ortungssystem nach einem der Ansprüche 1 bis 2, wobei die Haftmittel (5; 50) wenigstens einen Saugnapf (50) aufweisen.

7. Ortungssystem nach einem der vorhergehenden Ansprüche, wobei die Ortungsvorrichtung (1) ferner einen Beschleunigungssensor (7) aufweist.

8. Ortungssystem nach Anspruch 7, wobei die Ortungsvorrichtung (1) wenigstens einen Schlafmodus und einen Ortungsmodus, worin der aktuelle Aufenthaltsort des Fahrzeugs periodisch berechnet wird, aufweist, wobei der Beschleunigungssensor (7) dafür eingerichtet ist, eine Beschleunigung zu erkennen, die größer als eine vorgegebene Schwelle ist, und die Ortungsvorrichtung (1) aufzuwecken, wobei die Ortungsvorrichtung (1) ansprechend auf die Erkennung der Beschleunigung vom Schlafmodus in den Ortungsmodus wechselt.

9. Ortungssystem nach Anspruch 1, wobei die Ortungsvorrichtung (1) wenigstens einen Schlafmodus, einen Ortungsmodus und einen Alarmmodus, worin ein Alarm zur Ferneinheit (40) übertragen wird, aufweist, wobei sie ferner ein Manipulationen unterbindendes Gehäuse (14) mit einem Sensor (88), der dafür eingerichtet ist, das Öffnen des Gehäuses zu erkennen und die Vorrichtung ansprechend auf die Erkennung des Öffnens aufzuwecken, aufweist, wobei die Ortungsvorrichtung (1) ansprechend auf die Erkennung des Öffnens vom Schlafmodus oder vom Ortungsmodus in den Alarmmodus wechselt.

10. Ortungssystem nach einem der vorhergehenden Ansprüche, welches ferner ein Mikrofon (6) aufweist, wobei die Ortungsvorrichtung (1) dafür eingerichtet ist, vom Mikrofon (6) erzeugte Signale zur Ferneinheit (40) zu übertragen.

11. Ortungssystem nach einem der vorhergehenden Ansprüche, wobei die Ortungsvorrichtung (1) ferner eine Hilfsbatterie (9) aufweist, die dafür eingerichtet ist, von der Solarphotozelle wiederaufgeladen zu werden und die Batterie (8) zu versorgen.

12. Ortungssystem nach einem der vorhergehenden Ansprüche, welches ferner einen fernen Server (60) aufweist, der dafür eingerichtet ist, die Ortungsdaten (30) zu sammeln und zu behandeln.

13. Fahrzeug, welches ein autonomes Ortungssystem nach einem der vorhergehenden Ansprüche aufweist.

14. Verfahren zum Behandeln von Fahrzeugaufenthaltsort-Ortungsinformationen in einem Ortungssystem nach einem der Ansprüche 1 bis 13, welches folgende Schritte aufweist:
- Ausführen einer GPS-Fahrzeugaufenthaltsortsberechnung in der Ortungsvorrichtung (1),
- Übertragen von Ortungsdaten, welche den Aufenthaltsort des Fahrzeugs aufweisen, über den Sendeempfänger (3) zur Ferneinheit (40).

15. Verfahren zum Behandeln von Fahrzeugaufenthaltsort-Ortungsinformationen in einem Ortungssystem nach einem der Ansprüche 1 bis 13, welches folgende Schritte aufweist:
- periodisches Ausführen einer GPS-Aufenthaltsortsberechnung bei einer ersten Frequenz,
- Erzeugen einer Sammlung von Fahrzeugaufenthaltsorten als Funktion der Zeit, um Ortungsdaten zu bilden,
- periodisches Übertragen der Ortungsdaten bei einer zweiten Frequenz, wobei die zweite Frequenz niedriger als die erste Frequenz ist.

16. Verfahren zum Behandeln von Fahrzeugaufenthaltsort-Ortungsinformationen in einem Ortungssystem nach einem der Ansprüche 7 bis 8, welches folgende Schritte aufweist:
- Überwachen des Beschleunigungssensors (7),
- Vergleichen der Beschleunigungssensorinformationen mit einer vorgegebenen Schwelle,
- Hochfahren der autonomen Ortungsvorrichtung (1), falls die Beschleunigungssensorinformationen größer als die vorgegebene Schwelle sind.

## Revendications

1. Système de suivi pour un véhicule, comprenant un dispositif autonome de suivi (1), et une unité distante (40) qui est connectée et alimentée sur la prise de diagnostic de bord (41) du véhicule,
le dispositif autonome de suivi (1) comprenant:
- un élément de support (10) ayant une face frontale (11),
- une antenne GPS (20) adaptée pour recevoir des signaux GPS,
- un coupleur radio à courte portée (3) adapté pour transmettre sans fil des données à l'unité distante (40),
- une unité de commande (15) adaptée pour calculer une position courante du véhicule en fonction des signaux de l'antenne GPS et adaptée pour envoyer des données de suivi (30) comprenant au moins ladite position courante du véhicule vers l'unité distante (40) via ledit coupleur radio (3),
- au moins une batterie rechargeable (8),
- au moins une cellule photoélectrique solaire (4) adaptée pour alimenter la batterie rechargeable (8),
- des moyens de maintien (5;50) s'étendant au moins sur une partie de la face frontale (11) de l'élément de support, de sorte que le dispositif de suivi (1) peut être fixé à une surface (26; 26') d'un compartiment passager d'un véhicule,
dans lequel l'unité distante (40) est adaptée pour recevoir lesdites données de suivi depuis le dispositif de suivi autonome (1) via le coupleur radio à courte portée.

2. Système de suivi selon la revendication 1, dans lequel la cellule photoélectrique solaire (4) est agencée sur la face frontale (11) et les moyens de maintien (5;50) sont configurés pour être attachés sur une surface intérieure (26) du pare-brise (25) du véhicule.

3. Système de suivi selon la revendication 1, dans lequel les moyens de maintien (5;50) sont configurés pour être attachés sur une portion de surface (26') de la planche de bord du véhicule, dans lequel le dispositif de suivi (1) présente un boitier (14) avec une face arrière (14') opposée à la face avant (11) et dans lequel la cellule photoélectrique solaire (4) est agencée sur la face arrière (14').

4. Système de suivi selon l'une des revendications 1 à 2, dans lequel les moyens de maintien (5;50) comprennent une couche adhésive (5).

5. Système de suivi selon la revendication 4, dans lequel la couche adhésive est translucide.

6. Système de suivi selon l'une des revendications 1 à 2, dans lequel les moyens de maintien (5;50) comprennent au moins une ventouse (50).

7. Système de suivi selon l'une des revendications précédentes, dans lequel le dispositif de suivi (1) comprend en outre un capteur d'accélération (7).

8. Système de suivi selon la revendication 7, dans lequel le dispositif de suivi (1) a au moins un mode de sommeil et un mode de suivi dans lequel la position courante du véhicule est calculée périodiquement, et dans lequel le capteur d'accélération (7) est configuré pour détecter une accélération supérieure à un seuil prédéterminé, et configuré pour réveiller le dispositif de suivi (1), et dans lequel le dispositif de suivi (1) change dudit mode de sommeil vers ledit mode de suivi en réponse à la détection de ladite accélération.

9. Système de suivi selon la revendication 1, dans lequel le dispositif de suivi (1) a au moins un mode de sommeil, un mode de suivi et un mode alarme dans lequel une alarme peut être transmise à l'entité distante (40), comprenant en outre un boîtier anti effraction (14) avec un capteur (88) adapté pour détecter une ouverture dudit boîtier et configuré pour réveiller le dispositif de suivi en réponse à la détection de ladite ouverture, dans lequel le dispositif de suivi (1) change dudit mode de sommeil ou dudit mode de suivi vers le mode alarme en réponse à la détection de ladite ouvertur.

10. Système de suivi selon l'une des revendications précédentes, comprenant en outre un microphone (6), ledit dispositif de suivi (1) étant adapté pour transmettre des signaux générés par ledit microphone (6) à l'entité distante (40).

11. Système de suivi selon l'une des revendications précédentes, dans lequel le dispositif de suivi (1) comprend en outre une batterie auxiliaire (9), adaptée pour être rechargée par la cellule photoélectrique solaire et adaptée pour recharger la batterie (8).

12. Système de suivi selon l'une des revendications précédentes, comprenant en outre un serveur distant (60) adapté pour collecter et traiter les données de suivi (30).

13. **Véhicule** comprenant un système de suivi selon l'une des revendications précédentes.

14. **Méthode** pour gérer des données de suivi de positions de véhicules, dans un système de suivi selon l'une des revendications 1 à 12, comprenant les étampes :
- effectuer un calcul de position GPS de véhicule dans le dispositif de suivi (1),
- transmettre des données de suivi comprenant la position dudit véhicule, via le coupleur (3) à l'entité distante (40).

15. Méthode pour gérer des données de suivi de positions de véhicules, dans un système de suivi selon l'une des revendications 1 à 12, comprenant les étapes:
- effectuer périodiquement un calcul de position GPS, à une première fréquence,
- générer un ensemble de positions du véhicule en fonction du temps pour constituer des données de suivi,
- transmettre périodiquement les données de suivi à une seconde fréquence plus faible que la première fréquence.

16. Méthode pour gérer des données de suivi de positions de véhicules, dans un système de suivi selon l'une des revendications 7 à 8, comprenant les étapes:
- surveiller le capteur d'accélération (7),
- comparer l'information du capteur d'accélération avec un seuil prédéterminé,
- alimenter électriquement le dispositif de suivi (1) si l'information du capteur d'accélération est supérieure au seuil prédéterminé.
